# EUROPÄISCHE PATENTSCHRIFT

(11) **EP 2 368 461 B1**
(45) Veröffentlichungstag und Bekanntmachung des Hinweises auf die Patenterteilung: **11.09.2013**
(21) Anmeldenummer: 11002239.9
(22) Anmeldetag: 18.03.2011
(51) Int. Cl.: A47C 11/00, F16B 7/02

(54) **Sitzmöbel**
Seating furniture
Meuble d'assise

(30) Priorität: 22.03.2010 DE 102010012380
(43) Veröffentlichungstag der Anmeldung: 28.09.2011
(73) Patentinhaber: Kusch + Co. GmbH & Co. KG, 59969 Hallenberg (DE)
(72) Erfinder: Kusch, Dieter, 59969 Hallenberg (DE); Seipp, Karl-Heinz, 35018 Allendorf/Eder (DE); de le Roi, Robert, 35066 Frankenberg (DE)
(74) Vertreter: Henseler, Daniela

(56) Entgegenhaltungen:
- DE-A1- 2 556 981
- FR-A1- 2 649 871
- GB-A- 1 477 465
- US-A- 5 931 599
- US-A- 6 095 603
- US-A1- 2005 146 180

## Beschreibung

Die Erfindung betrifft ein Sitzmöbel nach dem Oberbegriff des Anspruchs 1.

Aus FR 2 649 871 A1 ist ein Sitzmöbel gemäß dem Oberbegriff des Anspruchs 1 bekannt.

Aus DE-OS 1 429 358 ist ein Sessel oder eine Sitzbank zur Verwendung als Wohnmöbel oder Sitzgelegenheit in öffentlichen Gebäuden bekannt. In dem Publikum zugänglichen Räumen, beispielsweise Warteräumen, Flughafengebäuden, Vorräumen und dergleichen sind die Anforderungen, die an Sitzgelegenheiten gestellt werden, außerordentlich hoch. Eine Grundforderung ist dabei, dass das Sitzmöbel einen hohen Sitzkomfort bietet und der Aufwand für den Auf- und Umbau des Sitzmöbels gering gehalten wird.

Um diesen Forderungen zu genügen, weist das bekannte Sitzmöbel einen festen, dauerhaften Rahmen auf, der sich normieren lässt und damit die Anzahl der einzelnen Komponenten zum Aufbau des Sitzmöbels minimiert. Die Sitz- und Rückenpolster lassen sich leicht und schnell entfernen, da die Polster für jeden Sitz getrennt und einzeln vorgesehen sind. Beschädigungen an einem Sitz können einfach dadurch behoben werden, dass man das betreffende Polster entfernt und durch ein neues Polster ersetzt.

Der Rahmen bildet Endrahmen, an denen ein Bein mit Hilfe von Schrauben befestigt ist. Zwischen den Beinen erstreckt sich eine T-förmige Schiene, an der Zwischenrahmen, d.h. die Rahmen ohne Fuß, befestigt sind. Die Länge der Schiene hängt von der Anzahl der Sitze ab, die auf einem Paar gemeinsamer Beine zu einer Sitzanordnung bzw. Sitzbank zusammengefügt sind.

Nachteilig ist die T-förmige Schiene, die eine Flanschverbindung zu einem Endrahmen und zu dem Oberteil eines Beines erfordert.

Aufgabe der Erfindung ist es daher, ein Sitzmöbel nach dem Oberbegriff des Anspruchs 1 zu schaffen, das einen hohen Sitzkomfort bietet und dabei einfach auf-und umbaubar ist.

Diese Aufgabe wird durch die Merkmale des Anspruchs 1 gelöst.

Hierdurch wird ein Sitzmöbel geschaffen, das schnell auf- und umbaubar ist. Das erfindungsgemäße Sitzmöbel erlaubt eine Befestigung von Standfüßen an der Schiene einer Abstützung. Insbesondere Mittelfüße, die zwischen Endfüßen bei mehrsitzigen Sitzanordnungen bevorzugt verwendet werden, sind sicher und stabil an der Schiene befestigbar. Darüber hinaus kann die Position des jeweiligen Standfußes unabhängig von der Sitzanordnung mit Sitzen und Rahmensockeln gewählt werden. Der optische Gesamteindruck des Sitzmöbels wird dabei verbessert. Die Anzahl Mittelfüße zwischen den endseitigen Standfüßen kann zudem gewählt werden.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
Fig. 1 zeigt schematisch eine perspektivische Ansicht eines Sitzmöbels,
Fig. 2a zeigt schematisch ein Teilstück des Sitzmöbels gemäß Fig. 1 mit Explosionsdarstellung einer Befestigung eines Standfußes,
Fig. 2b zeigt einen Ausschnitt der Darstellung gemäß Fig. 2a von unten,
Fig. 3a und Fig. 3b zeigen seitliche Draufsichten von verschiedenen Fußteilen für einen Standfuß,
Fig. 4 zeigt schematisch eine Seitenansicht eines Durchsteckbolzens mit Hohlkegelbuchse,
Fig. 5 zeigt eine Draufsicht von Fig. 4,
Fig. 6 ist ein Schnitt nach A-A gemäß Fig. 4,
Fig. 7 zeigt einen Querschnitt einer lösbaren Befestigung eines Standfußes.

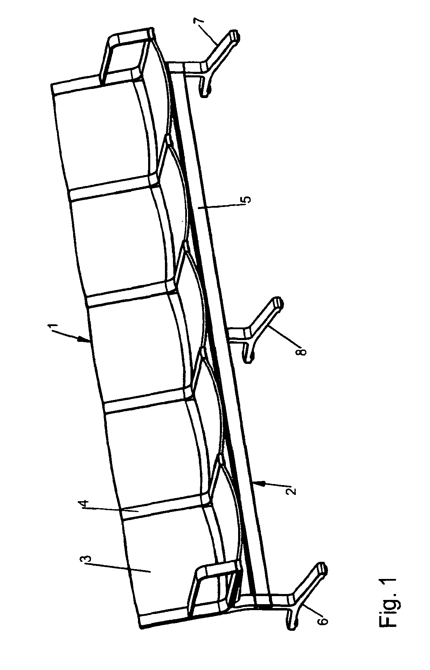

Wie Fig. 1 zeigt, betrifft die Erfindung ein Sitzmöbel mit einer Sitzanordnung 1 und einer Abstützung 2. Die Sitzanordnung umfasst mehrere Sitze 3, die an Rahmen 4 befestigt sind. Jeder Sitz 3 ist vorzugsweise zwischen zwei Rahmen 4 angeordnet und umfasst vorzugsweise ein Rückenteil und ein Sitzteil. Gemäß Fig. 1 sind fünf Sitze 3 in einer Reihe angeordnet. Die Anzahl Sitze 3 ist wählbar. Die Form der Sitzreihe ist ebenfalls wählbar. Einzelne Sitze 3 entlang einer Sitzreihe können auch durch Tische oder sonstige Inserts ersetzt oder austauschbar sein.

Alle Rahmen 4 können gleich ausgebildet sein, wodurch ein normiertes Rahmensystem gebildet wird. Jeder Sitz 3 ist randseitig und beidseitig an einem Rahmen 2 befestigt, um einen Sitzplatz zu bilden.

Die Sitzanordnung 1 mit ihren Sitzen 3 und Rahmen 4 stützt sich ab an der Abstützung 2. Die Abstützung 2 ist vorzugsweise eine gemeinsame Abstützung 2.

Die Abstützung 2 umfasst eine waagerechte längs der Sitzanordnung 1 sich erstreckende Schiene 5, auf der die Sitzanordnung 1 befestigbar ist. Die Schiene 5 wird von mindestens zwei Standfüßen 6, 7 getragen, die vorzugsweise Endfüße sind. Bei mehr als vier Sitzen 3 ist vorzugsweise mindestens ein Standfuß 8 als Mittelfuß vorgesehen.

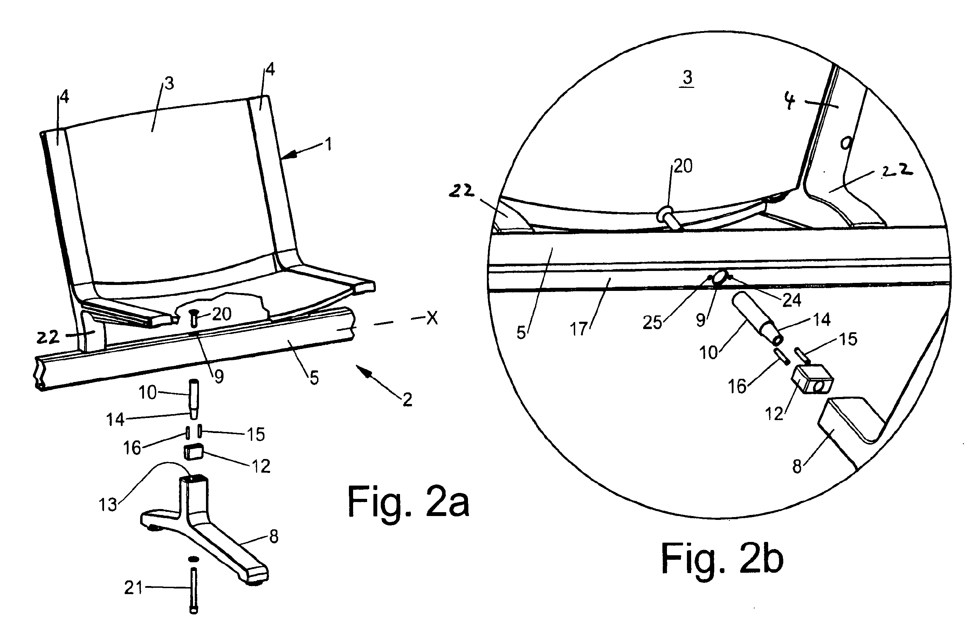

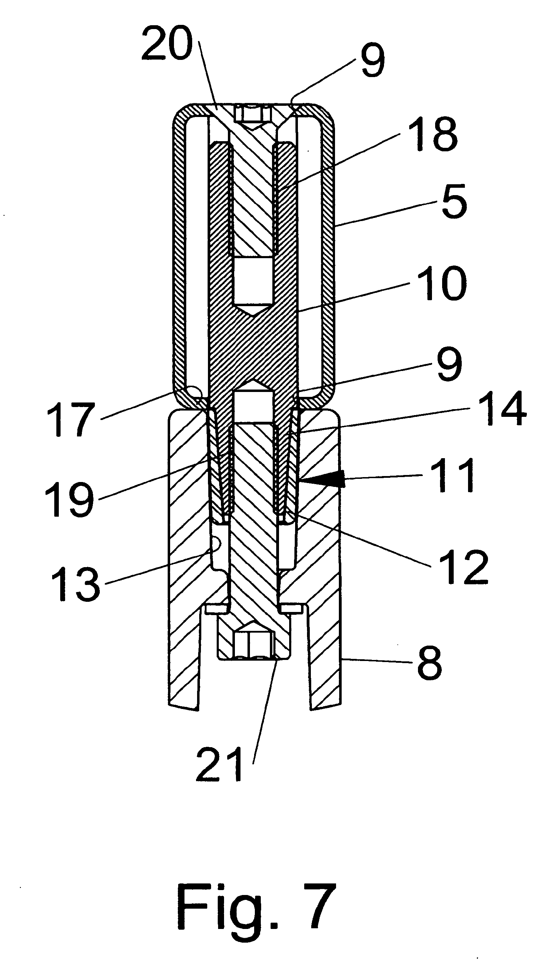

Wie Fig. 2a, Fig. 2b und Fig. 7 zeigen, ist die Schiene 5 eine Hohlprofilschiene, die für die lösbare Befestigung eines Standfußes 8 ein Durchgangsloch 9 quer zur Schienenachse X aufweist. In dem Durchgangsloch 9 ist ein Durchsteckbolzen 10 befestigbar und mit dem Standfuß 8 axial verspannbar.

Der Durchsteckbolzen 10 ist über eine axial verspannte Doppelkegellagerung 11 am Standfuß 8 befestigbar, wozu eine axial verschiebbare Hohlkegelbuchse 12 in eine Ausnehmung 13 des Standfußes 8 einsetzbar ist. Der Durchsteckbolzen besitzt dazu ein Ende 14 mit einem Außenkegel bzw. einem Außenkonus.

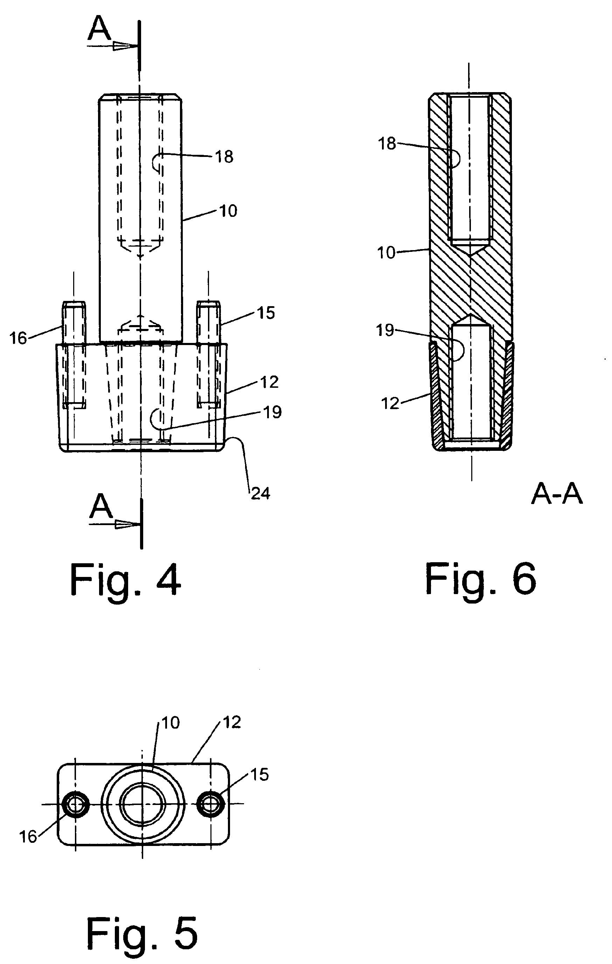

Wie Fig. 4 bis Fig. 6 zeigen, ist die Hohlkegelbuchse 12 gegen Verdrehung gesichert. Die Hohlkegelbuchse 12 weist zur Verdrehsicherung zwei zueinander beabstandete axiale Stifte 15, 16 auf, die bei axial verspanntem Standfuß 8 in Löcher 24, 25 (Fig. 2b) der Wandung 17 der Hohlprofilschiene 5 eingreifen. Die Wandung 17 der Hohlprofilschiene ist die Wandung, die beim Verspannen auf dem Standfuß 8 sitzt, wie Fig. 7 zeigt.

Der Durchsteckbolzen 10 ist jeweils endseitig mit mindestens einem Innengewinde 18, 19 ausgebildet, die zum axialen Verspannen mittels lösbarer Verschraubung dienen. In Fig. 7 sind die zugehörigen Schrauben 20, 21 dargestellt, die sich einerseits an der Hohlprofilschiene 5 und andererseits an dem Standfuß 8 abstützen. Durch vorzugsweise beidseitiges Einschrauben wird die axiale Verspannung unter gleichzeitiger Sicherung der Doppelkegellagerung bzw. Konuslagerung aufgrund axialer Verschiebung des Durchsteckbolzens 10 erreicht.

Wie insbesondere die Fig. 2a und Fig. 2b zeigen, weist die Sitzanordnung 1 Rahmensockel 22 auf, über die sich die Sitzanordnung 1 auf der Schiene 5 abstützt.

Wie vorstehend beschrieben, ist der an der Schiene 5 lösbar befestigte Standfuß 8 vorzugsweise ein Standfuß, der zwischen benachbarten Rahmensockeln 22 befestigbar ist. Der Standfuß ist dann vorzugsweise ein Mittelfuß, wie in Fig. 1 dargestellt ist. Das Sitzmöbel gemäß Fig. 1 hat zwei Standfüße 6, 7 als Endfüße und einen Standfuß 8 als Mittelfuß.

Alternativ oder zusätzlich kann ein Standfuß aber auch im Bereich eines Rahmensockels 22 befestigt werden, wozu dieser nicht dargestellte Durchführungsöffnungen für Befestigungsmittel aufweist.

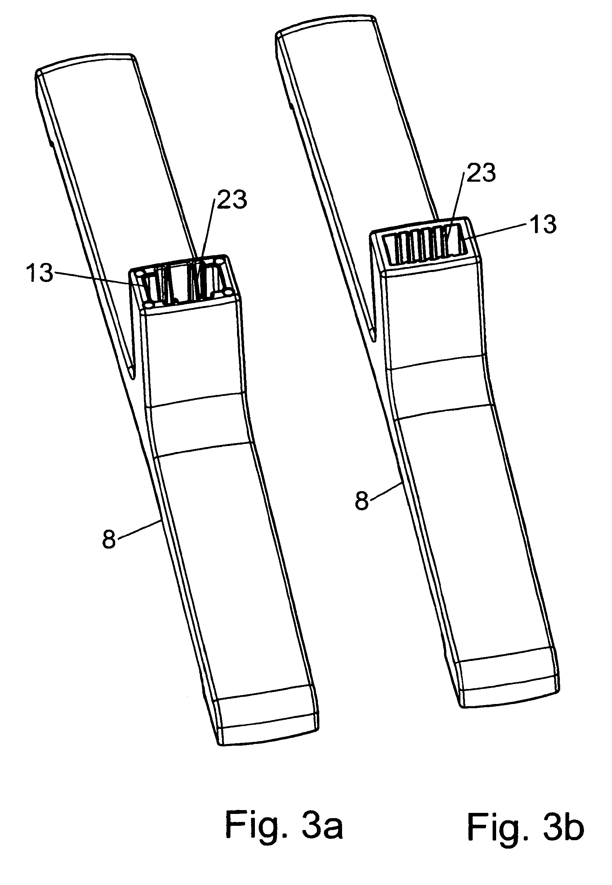

Die Fig. 3a und Fig. 3b zeigen verschiedene Ausführungsformen für einen Standfuß 8, bei dem die Ausnehmung 13 mit unterschiedlichen Rippenanordnungen 23 versehen ist, um die Lösbarkeit der Befestigung zu verbessern. Die Ausnehmung 13 kann zudem einen Innenkonus aufweisen, der mit einem beispielsweise vorgesehenen Außenkonus 24 der Hohlkegelbuchse 12 zusammenwirken kann.

## Patentansprüche

1. Sitzmöbel mit mehreren eine Sitzanordnung (1) bildenden Sitzen (3) und einer Abstützung (2), die eine waagerechte längs der Sitzanordnung sich erstreckende Schiene (5) umfasst, auf der die Sitzanordnung (1) befestigbar ist und die von mindestens zwei Standfüßen (6, 7, 8) getragen wird, die Schiene (5) eine Hohlprofilschiene ist, die für die lösbare Befestigung eines Standfußes (8) ein Durchgangsloch (9) quer zur Schienenachse (X) aufweist, in dem ein Durchsteckbolzen (10) befestigbar und mit dem Standfuß (8) axial verspannbar ist, **dadurch gekennzeichnet, dass** der Durchsteckbolzen (10) über eine axial verspannte Doppelkegellagerung (11) am Standfuß (8)befestigbar ist, wozu eine axial verschiebbare gegen Verdrehung gesicherte Hohlkegelbuchse (12) in eine Ausnehmung (13) des Standfußes (8) einsetzbar ist, und die Hohlkegelbuchse (12) zur Verdrehsicherung zwei zueinander beabstandete axiale Stifte (15, 16) aufweist, die bei axial verspanntem Durchsteckbolzen (10) in Löcher (24, 25) der Wandung (17) der Schiene (5) eingreifen.

2. Sitzmöbel nach Anspruch 1, **dadurch gekennzeichnet, dass** der Durchsteckbolzen (10) jeweils endseitig mit mindestens einem Innengewinde (18, 19) ausgebildet ist zum axialen Verspannen mittels lösbarer Verschraubung.

3. Sitzmöbel nach Anspruch 1 oder 2, **dadurch gekennzeichnet, dass** die Sitzanordnung (1) Rahmensockel (22) aufweist, über die sich die Sitzanordnung (1) auf der Schiene (5) abstützt.

4. Sitzmöbel nach Anspruch 3, **dadurch gekennzeichnet, dass** der an der Schiene (5) befestigbare Standfuß (8) ein Standfuß ist, der zwischen Rahmensockeln (22) an der Schiene (5) befestigbar ist.

5. Sitzmöbel nach Anspruch 3, **dadurch gekennzeichnet, dass** der an der Schiene (5) befestigbare Standfuß ein Standfuß ist, der im Bereich der Rahmensockel (22) befestigbar ist, wozu diese Durchführungsöffnungen für Befestigungsmittel aufweisen.

## Claims

1. Piece of seating furniture having a plurality of seats (3) forming a seat arrangement (1), and having a supporting means (2) which comprises a horizontal rail (5) extending along the seat arrangement, on which the seat arrangement (1) can be fastened and which is borne by at least two foot stands (6, 7, 8), the rail (5) is a hollow-profile rail which, for the releasable fastening of a foot stand (8), has a through-hole (9) in the direction transverse to the rail axis (X), it being possible for a plug-through bolt (10) to be fastened in the through-hole and braced axially with the foot stand (8), **characterized in that** the plug-through bolt (10) can be fastened on the foot stand (8) via an axially braced double-cone bearing means (11), for which purpose an axially displaceable hollow-cone bushing (12), which is secured against rotation, can be inserted into an aperture (13) of the foot stand (8), and the hollow-cone bushing (12), for securing against rotation, has two spaced-apart axial pins (15, 16) which, with the plug-through bolt (10) braced axially, engage in holes (24, 25) in the wall (17) of the rail (5).

2. Piece of seating furniture according to Claim 1, **characterized in that** the plug-through bolt (10) is designed, at each end, with at least one internal thread (18, 19) for axial bracing by means of releasable screw connection.

3. Piece of seating furniture according to Claim 1 or 2, **characterized in that** the seat arrangement (1) has frame bases (22), via which the seat arrangement (1) is supported on the rail (5).

4. Piece of seating furniture according to Claim 3, **characterized in that** the foot stand (8), which can be fastened on the rail (5), is a foot stand which can be fastened on the rail (5) between frame bases (22).

5. Piece of seating furniture according to Claim 3, **characterized in that** the foot stand, which can be fastened on the rail (5), is a foot stand which can be fastened in the region of the frame bases (22), for which purpose the latter have through-passage openings for fastening means.

## Revendications

1. Meuble d'assise comprenant plusieurs sièges (3) formant un agencement d'assise (1) et comprenant un support (2) qui comporte un rail (5) horizontal s'étendant le long de l'agencement d'assise, sur lequel support l'agencement d'assise (1) peut être fixé, et lequel support est supporté par au moins deux pieds d'appui (6, 7, 8), le rail (5) étant un rail profilé creux qui comprend, en vue de la fixation de manière amovible d'un pied d'appui (8), un trou débouchant (9) transversalement par rapport à l'axe de rail (X), dans lequel trou débouchant un boulon enfichable (10) peut être fixé et peut être serré axialement à l'aide du pied d'appui (8), **caractérisé en ce que** le boulon enfichable (10) peut être fixé au pied d'appui (8) par le biais d'un palier conique double serré axialement (11), une douille conique creuse (12) déplaçable axialement et bloquée en rotation pouvant à cette fin être insérée dans un évidement (13) du pied d'appui (8), et la douille conique creuse (12) comprenant, en vue du blocage en rotation, deux goupilles axiales (15, 16) espacées l'une de l'autre qui, lorsque le boulon enfichable (10) est serré axialement, viennent en prise dans des trous (24, 25) de la paroi (17) du rail (5).

2. Meuble d'assise selon la revendication 1, **caractérisé en ce que** le boulon enfichable (10) est réalisé à ses extrémités à chaque fois avec au moins un filetage intérieur (18, 19) pour le serrage axial au moyen d'un vissage pouvant être desserré.

3. Meuble d'assise selon la revendication 1 ou 2, **caractérisé en ce que** l'agencement d'assise (1) comprend des bases de cadre (22) par le biais desquelles l'agencement d'assise (1) s'appuie sur le rail (5).

4. Meuble d'assise selon la revendication 3, **caractérisé en ce que** le pied d'appui (8) pouvant être fixé au rail (5) est un pied d'appui qui peut être fixé au rail (5) entre des bases de cadre (22).

5. Meuble d'assise selon la revendication 3, **caractérisé en ce que** le pied d'appui pouvant être fixé au rail (5) est un pied d'appui qui peut être fixé dans la région des bases de cadre (22), ces bases de cadre comprenant à cette fin des ouvertures de passage pour des moyens de fixation.
